# EUROPÄISCHE PATENTSCHRIFT

(11) **EP 3 475 365 B1**
(45) Veröffentlichungstag und Bekanntmachung des Hinweises auf die Patenterteilung: **14.08.2019**
(21) Anmeldenummer: 16734606.3
(22) Anmeldetag: 28.06.2016
(51) Int. Cl.: C08L 71/02, C09J 171/02, C09J 175/04

(54) **VERNETZBARE MASSEN AUF BASIS VON ORGANYLOXYSILANTERMINIERTEN POLYMEREN**
CROSSLINKABLE MATERIALS BASED ON ORGANYLOXYSILANE-TERMINATED POLYMERS
MATIÈRES RÉTICULABLES À BASE DE POLYMÈRES À TERMINAISON ORGANYLOXYSILANE

(43) Veröffentlichungstag der Anmeldung: 01.05.2019
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2016/065039
(87) Internationale Veröffentlichungsnummer: WO 2018/001470

(56) Entgegenhaltungen:
- EP-A1- 1 715 016
- WO-A1-2015/024773
- DE-A1-102006 048 041

## Beschreibung

Die Erfindung betrifft vernetzbare Massen auf der Basis von silanvernetzenden Prepolymeren, Verfahren zu deren Herstellung und deren Verwendung als Kleb- und Dichtstoffe.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. Eine der wichtigsten Anwendungen von derartigen Materialien ist die Herstellung von Kleb- und Dichtstoffen.

So zeigen Kleb- und Dichtstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können. Gegenüber herkömmlichen Silicondichtstoffen weisen silanvernetzende Systeme zudem die Vorteile einer Überstreichbarkeit sowie geringerer Verschmutzungsneigungen auf. Gegenüber anderen reaktiven Klebstoffsystemen wie Polyurethansystemen weisen sie zudem den Vorteil auf, toxikologisch unbedenklich zu sein.

Dabei werden in vielen Anwendungen einkomponentige Systeme (1K-Systeme) bevorzugt, die bei Kontakt mit Luftfeuchtigkeit aushärten. Einer der entscheidenden Vorteile von einkomponentigen Systemen ist vor allem deren sehr leichte Applizierbarkeit, da hier keine Mischung verschiedener Klebstoffkomponenten durch den Anwender erforderlich ist.

Nachteilig an diesen Systemen entsprechend des Standes der Technik ist insbesondere die geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren. Dies gilt insbesondere für silanvernetzende Systeme, die - wie die meisten kommerziell erhältlichen MS-Polymere der Fa. Kaneka Corp. (Japan, Osaka) - nicht über 3-Trialkoxysilyl-propyl-gruppen sondern nur über die nochmals reaktionsträgeren 3-Methyldialkoxysilylpropyl-gruppen verfügen.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL® STP-E10 oder -E30 der Wacker-Chemie AG.

Die üblichen silanterminierten Polymere, wie sie in der Literatur vielfach beschrieben sind, verfügen an der überwiegenden Anzahl ihrer Kettenenden über eine vernetzbare Silanfunktion und enthalten somit, sofern sie auf Polymeren mit linearen Rückgraten basieren, zwei Silanfunktionen pro Molekül. Verzweigte Polymere verfügen sogar, in Abhängigkeit von ihrem Verzweigungsgrad über noch mehr Kettenenden und damit über nochmal mehr reaktive Silanfunktionen pro Molekül.

Diese Produkte härten zu Massen mit nur wenig klebrigen bzw. vollkommen klebfreien Oberflächen aus. Dies ist oftmals, aber keineswegs immer erwünscht. Zudem weisen die entsprechenden Materialien eine vergleichsweise geringe Haftung auf niederenergetischen Oberflächen, insbesondere auf verschiedenen Kunststoffen wie EPDM (Ethylen-Propylen-Dien-Kautschuk), PVC (Polyvinylchlorid), PP (Polypropylen) oder PE (Polyethylen), auf. Eine gewisse Verbesserung stellen hier Kleb- und Dichtstoffe dar, die einen gewissen Anteil an Polymeren enthalten, die nicht über mindestens zwei, sondern nur über eine Silylgruppe verfügen, wie sie beispielsweise in DE-A 102013216852 beschrieben werden. Aber auch diese Materialien zeigen auf den o.g. Oberflächen noch keine ausreichende Haftung.

Das Dokument WO 2015/024773 betrifft Massen enthaltend ein Polymer (A), das dem vorliegenden Polymer (A) entspricht, und ein anderes Polymer (B). Ein Siliconharz, z.B. ein Phenylsiliconharz, kann auch verwendet werden.

Aufgabe der Erfindung war somit die Entwicklung von Klebstoffen auf Basis von silanterminierten Prepolymeren, welche die Nachteile des Standes der Technik überwinden.

Gegenstand der Erfindung sind Massen (M) enthaltend
(A) 100 Gewichtsteile silanvernetzende Polymere, ausgewählt aus
   Polymere (A1) der Formel

   R²-O-Z¹-O-CO-NH- (CH₂) -SiRₐ (OR¹)₃₋ₐ (I)

   und
   Polymere (A2) der Formel

   R⁴-O-Z²-O-CO-NH-(CH₂)₃-Si(OR³)₃ (II),

   wobei
   - Z¹: zweiwertige Polymerreste, die frei von C-gebundenen Hydroxylgruppen sind, bedeutet,
   - Z²: zweiwertige Polymerreste, die frei von C-gebundenen Hydroxylgruppen sind, bedeutet,
   - R: gleich oder verschieden sein kann und einen einwertigen, SiC-gebundenen, gegebenenfalls substituierten Kohlenwasserstoffrest darstellt,

   - R¹: gleich oder verschieden sein kann und Wasserstoffatom oder einwertige, gegebenenfalls substituierte Kohlenwasserstoffreste darstellt,
   - R³: gleich oder verschieden sein kann und Wasserstoffatom oder einwertige, gegebenenfalls substituierte Kohlenwasserstoffreste darstellt,
   - R²: einwertige, gegebenenfalls substituierte Kohlenwasserstoffreste darstellt,
   - R⁴: einwertige, gegebenenfalls substituierte Kohlenwasserstoffreste darstellt und
   - a: gleich 0 oder 1, bevorzugt 0, ist,
(B) 0 bis 300 Gewichtsteile silanvernetzende Polymere mit mindestens zwei Endgruppen der Formel

   -SiR⁷_{c}(OR⁸)_{3-c} (III),

   wobei
   - R⁷: gleich oder verschieden sein kann und einwertige, SiC-gebundene, gegebenenfalls substituierte Kohlenwasserstoffreste darstellt,
   - R⁸: gleich oder verschieden sein kann und Wasserstoffatom oder einwertige, gegebenenfalls substituierte Kohlenwasserstoffreste darstellt und
   - c: gleich 0, 1 oder 2, bevorzugt 0 oder 1, ist,
   sowie
(C) 20 bis 400 Gewichtsteile eines Klebeharzes ausgewählt aus Harze (c1) bis (c4).

Der Erfindung liegt die überraschende Entdeckung zugrunde, dass die erfindungsgemäßen Massen enthaltend die Komponenten (A) und (C) sowie gegebenenfalls auch Komponente (B) bei Kontakt mit Feuchtigkeit zu festen Massen aushärten, die ein ausgezeichnetes Haftprofil auf niederenergetischen Oberflächen, insbesondere auf Kunststoffen wie EPDM, insbesondere EPDM-Dachbahnen, PVC-, PE- und PP-Folien zeigen.

Entscheidend für die guten Eigenschaften sind insbesondere die erfindungsgemäßen Polymere (A), die über genau eine reaktive Silylgruppe und ein nicht reaktives Kettenende verfügen, weshalb sie einerseits zu den gewünschten, sehr guten Haftungseigenschaften führen, gleichzeitig aber keine nicht vernetzbare und damit migrierbare Polymere aufweisen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei dem Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ und R³ sind unabhängig voneinander Wasserstoffatom oder die für Rest R angegebenen Beispiele.

Bevorzugt handelt es sich bei den Resten R¹ und R³ unabhängig voneinander um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Reste R² und R⁴ sind unabhängig voneinander die für Rest R angegebenen Beispiele.

Bevorzugt handelt es sich bei den Resten R² und R⁴ unabhängig voneinander um gegebenenfalls mit Halogenatomen substituierte Alkylreste mit 1 bis 10 Kohlenstoffatomen, besonders bevorzugt um Alkylreste mit 1 bis 6 Kohlenstoffatomen, insbesondere um den Methyl-, Ethylrest, n-Propyl- oder n-Butylrest.

Beispiele für Polymerreste Z¹ und Z² sind unabhängig voneinander Polyester-, Polyether-, Polyurethan-, Polyalkylen- oder Polyacrylatreste, die frei von C-gebundenen Hydroxylgruppen sind.

Bei den Polymerresten Z¹ und Z² handelt es sich unabhängig voneinander bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen oder Copolymere von Polyisobutylen mit Isopren; Polychloroprene; Polyisoprene; Polyurethane; Polyester; Polyamide; Polyacrylate; Polymethacrylate; Vinylpolymer und/oder Polycarbonate enthalten, die frei von C-gebundenen Hydroxylgruppen sind.

Besonders bevorzugt handelt es sich bei den Resten Z¹ und Z² um lineare Polyoxyalkylenreste, die frei von C-gebundenen Hydroxylgruppen sind.

Die Reste Z¹ und Z² weisen dabei eine zahlenmittlere Molmasse (Zahlenmittel Mₙ) von vorzugsweise mindestens 2000 g/mol, bevorzugt mindestens 3000 g/mol, besonders bevorzugt mindestens 4000 g/mol, auf. Vorzugsweise weisen sie eine zahlenmittlere Molmasse Mₙ von höchstens 11000 g/mol, bevorzugt höchstens 9000 g/mol, besonders bevorzugt von höchstens 7000 g/mol, auf.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die erfindungsgemäß als Komponente (A) einsetzbare Polymere (A1) der Formel (I) werden bevorzugt hergestellt, indem Polymere der Formel

R²-O-Z¹-OH (IV)

mit Silanen der Formel

OCN-(CH₂)-SiRₐ(OR¹)₃₋ₐ (V)

umgesetzt werden, wobei alle Reste und Indizes eine der oben genannten Bedeutungen haben.

Die erfindungsgemäß als Komponente (A) einsetzbare Polymere (A2) der Formel (II) werden bevorzugt dadurch hergestellt, indem Polymere der Formel

R⁴-O-Z²-OH (VI)

mit Silanen der Formel

OCN-(CH₂)₃-Si(OR³)₃ (VII)

umgesetzt werden, wobei alle Reste und Indizes eine der oben genannten Bedeutungen haben.

Vorzugsweise wird die Reaktion dabei so durchgeführt, dass eine weitgehend vollständige Silanterminierung, d.h. eine Silanterminierung von mindestens 90 %, besonders bevorzugt mindestens 95%, insbesondere mindestens 98%, aller vorhandenen OH-funktionellen Kettenenden gelingt.

Vorzugsweise enthalten die erfindungsgemäßen Massen (M) dabei nicht silanfunktionelle Polymere der Formeln (IV) und (VI) in Mengen von höchstens 15 Gewichtsteilen, besonders bevorzugt von höchstens 10 Gewichtsteilen, insbesondere von höchstens 5 Gewichtsteilen jeweils bezogen auf 100 Gewichtsteile Komponente (A).

Die Herstellung der Polymere (A1) und (A2) kann dabei nach Verfahren erfolgen, wie sie prinzipiell in EP 1 535 940 B1 oder EP 1 896 523 B1 beschriebenen sind, und die sich lediglich darin unterscheiden, dass als Edukte monofunktionelle Polymere der Formel (IV) bzw. (VI) eingesetzt werden und die jeweiligen Stöchiometrien der Edukte entsprechend angepasst werden. Des Weiteren sind in DE-A 102013216852 geeignete Herstellverfahren beschrieben.

Vorzugsweise erfolgt die Herstellung der Polymere (A1) und (A2) in Gegenwart eines Katalysators (KB). Beispiele für gegebenenfalls eingesetzte Katalysatoren (KB) sind bismuthaltige Katalysatoren, wie z.B. Katalysatoren mit dem Handelsnamen Borchi® Kat 22, Borchi® Kat VP 0243 oder Borchi® Kat VP 0244 der Borchers GmbH, sowie auch diejenigen Verbindungen, die unten als Härtungskatalysatoren (D) beschrieben sind.

Falls zur Herstellung der Polymere (A1) Katalysatoren (KB) eingesetzt werden, handelt es sich um Mengen von bevorzugt 0,001 bis 5 Gewichtsteilen, insbesondere Mengen von 0,05 bis 1 Gewichtsteilen, jeweils bezogen auf 100 Gewichtsteile der OHfunktionellen Polymere der Formeln (IV).

Falls zur Herstellung der Polymere (A2) Katalysatoren (KB) eingesetzt werden, handelt es sich um Mengen von bevorzugt 0,001 bis 5 Gewichtsteilen, insbesondere Mengen von 0,05 bis 1 Gewichtsteilen, jeweils bezogen auf 100 Gewichtsteile der OHfunktionellen Polymere der Formeln (VI).

Bei der Herstellung der erfindungsgemäß eingesetzten Polymere (A1) werden die Edukte der Formeln (IV) und (V) vorzugsweise in einem Mengenverhältnis eingesetzt, dass auf 1 Mol Hydroxylfunktion 0,9 bis 2,0 Mol, bevorzugt 0,95 bis 1,6 Mol, besonders bevorzugt 1,0 Mol bis 1,4 Mol, Isocyanatgruppen eingesetzt werden.

Bei der Herstellung der erfindungsgemäß eingesetzten Polymere (A2) werden die Edukte der Formeln (VI) und (VII) vorzugsweise in einem Mengenverhältnis eingesetzt, dass auf 1 Mol Hydroxylfunktion 0,9 bis 2,0 Mol, bevorzugt 0,95 bis 1,6 Mol, besonders bevorzugt 1,0 Mol bis 1,4 Mol, Isocyanatgruppen eingesetzt werden.

Die mittleren Molekulargewichte Mₙ der Verbindungen (A1) und (A2) betragen vorzugsweise jeweils mindestens 3 000 g/mol und vorzugsweise höchstens 8 000 g/mol, besonders bevorzugt höchstens 7 000 g/mol.

Die Viskosität der Polymere (A1) und (A2) beträgt unabhängig voneinander vorzugsweise mindestens 0,2 Pas, bevorzugt mindestens 0,5 Pas, besonders bevorzugt mindestens 1 Pas, und vorzugsweise höchstens 10 Pas, bevorzugt höchstens 8 Pas, insbesondere höchstens 5 Pas, jeweils gemessen bei 20°C.

Die Viskosität wird im Rahmen der vorliegenden Erfindung nach einer Temperierung auf 23°C mit einem DV 3 P-Rotationsviskosimeter von Fa. A. Paar (Brookfieldsystme), unter Verwendung von Spindel 5 bei 2,5 UPM entsprechend der ISO 2555 bestimmt.

Bevorzugt handelt es sich bei dem erfindungsgemäß als Komponente (A) einsetzbaren Polymer (A1) um an jeweils einem Kettenende mit Gruppen der Formel -O-CO-NH-(CH₂)-Si(CH₃)(OCH₃)₂ terminierte, lineare Polyoxypropylene. Besonders bevorzugt weisen diese Polymere am anderen Ende eine Alkylgruppe auf, wie z.B. das Verkaufsprodukt GENIOSIL® XM 20 erhältlich bei der Wacker Chemie AG (D-München).

Bevorzugt handelt es sich bei dem erfindungsgemäß als Komponente (A) einsetzbaren Polymer (A2) um an jeweils einem Kettenende mit Gruppen der Formel -O-CO-NH-(CH₂)₃-Si(OCH₃)₃ terminierte, lineare Polyoxypropylene. Besonders bevorzugt weisen diese Polymere am anderen Ende eine Alkylgruppe auf, wie z.B. das Verkaufsprodukt GENIOSIL® XM 25 erhältlich bei der Wacker Chemie AG (D-München).

Bei Komponente (A) kann es sich ausschließlich um Komponente (A1), ausschließlich um Komponente (A2) oder um Gemische aus Komponenten (A1) und (A2) handeln.

Bevorzugt wird als Komponente (A) ausschließlich Komponente (A1) oder ausschließlich Komponente (A2) eingesetzt.

Die erfindungsgemäß eingesetzten Komponenten (A1) bzw. (A2) können jeweils nur eine Art von Verbindung der Formel (I) bzw. (II) enthalten wie auch Gemische unterschiedlicher Arten von Verbindungen der Formel (I) bzw. (II).

Vorzugsweise enthalten die erfindungsgemäßen Massen (M) Komponente (A) in Konzentrationen von höchstens 80 Gew.-%, besonders bevorzugt höchstens 70 Gew.-%, und vorzugsweise mindestens 10 Gew.-%, besonders bevorzugt mindestens 20 Gew.-%.

Beispiele für den Reste R⁷ sind die für Rest R angegebenen Beispiele.

Bevorzugt handelt es sich bei dem Rest R⁷ um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für den Reste R⁸ sind Wasserstoffatom oder die für Rest R angegebenen Beispiele.

Bevorzugt handelt es sich bei dem Resten R⁸ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Bei der gegebenenfalls eingesetzten Komponente (B) handelt es sich vorzugsweise um Polymere, die mindestens zwei Endgruppen der Formel (III) aufweisen. Bei Komponente (B) liegt die Anzahl der Endgruppen der Formel (III) pro Molekül vorzugsweise bei höchstens 4.

Bei Komponente (B) handelt es sich bevorzugt um Polyester, Polyacrylate, Polyoxyalkylene oder Polyurethane, die mindestens zwei Endgruppen der Formel (III) aufweisen, besonders bevorzugt um Polyurethane oder Polyoxyalkylene, die mindestens zwei Endgruppen der Formel (III) aufweisen, insbesondere um Polyoxyalkylene, die zwei oder drei Endgruppen der Formel (III) aufweisen.

Bei den Endgruppen der erfindungsgemäß gegebenenfalls eingesetzten Komponente (B) handelt es sich vorzugsweise um solche der allgemeinen Formeln

-NH-C(=O)-NR'-(CH₂)_{b}-SiR⁷_{c}(OR⁸)_{3-c} (VIII),

-O-C(=O)-NH-(CH₂)_{b}-SiR⁷_{c}(OR⁸)_{3-c} (IX)

oder

-O-(CH₂)_{b}-SiR⁷_{c}(OR⁸)_{3-c} (X),

wobei
- R': eine Gruppe -CH(COOR")-CH₂-COOR" oder einen gegebenenfalls substituierten Kohlenwasserstoffrest mit 1 bis 20 Kohlenstoffatomen, bevorzugt eine Gruppe -CH(COOR")-CH₂-COOR" oder eine lineare, verzweigte oder cyclische Alkylgruppe mit 1 bis 10 Kohlenstoffatomen, darstellt,
- R": gleich oder verschieden sein kann und einen gegebenenfalls substituierten Kohlenwasserstoffrest mit 1 bis 20 Kohlenstoffatomen, bevorzugt eine Alkylgruppe mit 1 bis 10 Kohlenstoffatomen, besonders bevorzugt einen Methyl-, Ethyl- oder Propylreste, darstellt,
- b: gleich oder verschieden sein kann und eine ganze Zahl von 1 bis 10, bevorzugt 1, 3 oder 4, besonders bevorzugt 1 oder 3, insbesondere 1, ist
und alle übrigen Reste und Indizes eine der oben dafür angegebenen Bedeutungen aufweisen.

Sofern es sich bei den Verbindungen (B) um Polyurethane handelt, was bevorzugt ist, weisen diese vorzugsweise mindestens zwei Endgruppen ausgewählt aus

-NH-C(=O)-NR'-(CH₂)₃-Si(OCH₃)₃,

-NH-C(=O)-NR'-(CH₂)₃-Si(OC₂H₅)₃,

-O-C(=O)-NH-(CH₂)₃-Si(OCH₃)₃

und

-O-C(=O)-NH-(CH₂)₃-Si(OC₂H₅)₃

auf, wobei R' eine der oben genannten Bedeutungen hat.

Sofern es sich bei den Verbindungen (B) um Polyoxyalkylene, insbesondere Polyoxypropylene, handelt, was besonders bevorzugt ist, weisen diese vorzugsweise mindestens zwei Endgruppen ausgewählt aus

-O-(CH₂)₃-Si(CH₃)(OCH₃)₂

-O-(CH₂)₃-Si(OCH₃)₃,

-O-C(=O)-NH-(CH₂)₃-Si(OC₂H₅)₃,

-O-C(=O)-NH-CH₂-Si(CH₃)(OC₂H₅)₂,

-O-C(=O)-NH-CH₂-Si(OCH₃)₃,

-O-C(=O)-NH-CH₂-Si(CH₃)(OCH₃)₂ und

-O-C(=O)-NH-(CH₂)₃-Si(OCH₃)₃ auf.

Die zahlenmittleren Molekulargewichte Mₙ der Verbindungen (B) betragen vorzugsweise mindestens 400 g/mol, besonders bevorzugt mindestens 4 000 g/mol, insbesondere mindestens 10 000 g/mol, und vorzugsweise höchstens 30 000 g/mol, besonders bevorzugt höchstens 20 000 g/mol, insbesondere höchstens 19 000 g/mol.

Die Viskosität der Verbindungen (B) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die erfindungsgemäß eingesetzten Verbindungen (B) sind handelsübliche Produkte oder können nach in der Chemie gängigen Verfahren hergestellt werden.

Die Herstellung der erfindungsgemäß gegebenenfalls eingesetzten Polymere (B) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Beispiele für Polymere (B) sind die Verkaufsprodukte GENIOSIL® STP-E10, GENIOSIL® STP-E15, GENIOSIL® STP-E30 und GENIOSIL® STP-E35 der Wacker Chemie AG (D-München), ST 61, ST 75 und ST 77 der Fa. Evonik (D-Essen), MS-Polymere der Fa. Kaneka (Japan, Osaka), z.B. S203H, S303H, SAT010, SAX350, SAX400 und S227 sowie SPUR Polymere der Fa. Momentive (USA, Albany-New York), z.B. SPUR 1050MM, SPUR 1015LM und SPUR 3100HM.

Jeweils bezogen auf 100 Gewichtsteile Komponente (A) enthalten die erfindungsgemäßen Massen vorzugsweise mindestens 10 Gewichtsteile, besonders bevorzugt mindestens 20 Gewichtsteile, Komponente (B). Jeweils bezogen auf 100 Gewichtsteile Komponente (A) enthalten die erfindungsgemäßen Massen vorzugsweise höchstens 250 Gewichtsteile, besonders bevorzugt höchstens 200 Gewichtsteile Komponente (B).

Bei dem erfindungsgemäß eingesetzten Klebeharz (C) handelt es sich um Verbindungen, die ausgewählt werden aus
(C1) phenolmodifizierten Terpenharzen vorzugsweise mit einem Erweichungspunkt im Bereich von 110-130°C,
(C2) Kohlenwasserstoffharzen vorzugsweise mit einem Erweichungspunkt im Bereich von 70-120°C,
(C3) Kolophoniumharzen vorzugsweise mit einem Erweichungspunkt im Bereich von 90-110°C und
(C4) Acrylesterharzen vorzugsweise mit einem Erweichungspunkt im Bereich von 30-180°C, besonders bevorzugt mit einem Erweichungspunkt im Bereich von 70-120°C.

Die Erweichungspunkte der Klebeharze können entsprechend den ASTM E28 Teststandard bestimmt werden.

Die phenolmodifizierten Terpenharze (C1) werden vorzugsweise durch eine Polymerisation von Terpen-Kohlenwasserstoffen und Phenol in Gegenwart eines Friedel-Craft-Katalysators hergestellt.

Bevorzugt weisen die phenolmodifizierten Terpenharzen (C1) zahlenmittlere Molmassen Mₙ von höchstens 10 000 g/mol, besonders bevorzugt von höchstens 2000 g/mol, insbesondere von höchstens 1000 g/mol auf. Bevorzugt weisen die phenolmodifizierten Terpenharzen (C1) zahlenmittlere Molmassen Mₙ von mindestens 100 g/mol, besonders bevorzugt von mindestens 200 g/mol, insbesondere von mindestens 250 g/mol auf.

Entsprechende Produkte (C1) sind beispielsweise unter den Handelsnamen DERTOPHENE® H150 oder DERTOPHENE® T105 von der Fa. DRT (F-Dax Cedex) erhältlich. Diese Produkte weisen mittlere Molmassen Mₙ von 500-650 g/mol auf.

Bei den Kohlenwasserstoffharzen (C2) handelt es sich vorzugsweise um solche, die hergestellt werden
a) durch eine Polymerisation von Methylstryrol, gegebenenfalls unter gleichzeitiger Reaktion mit Phenol,
b) durch eine Polymerisation von ungesättigten aliphatischen Kohlenwasserstoffen mit typischerweise 5-10 Kohlenstoffatomen oder eine Copolymerisation dieser Kohlenwasserstoffe mit aromatischen Kohlenwasserstoffen, wobei die Reaktionsprodukte auch noch mit Maleinsäurederivaten gepfropft werden können, oder
c) durch eine Polymerisation von Terpen-Kohlenwasserstoffen in Gegenwart von Friedel-Craft-Katalysatoren, oder
d) um Copolymere auf Basis natürlicher Terpene, beispielsweise Styrol-Terpen- oder Vinyltoluol-Terpen-Copolymere.

Bevorzugt weisen die Kohlenwasserstoffharze (C2) zahlenmittlere Molmassen Mₙ von höchstens 10 000 g/mol, besonders bevorzugt von höchstens 2000 g/mol, insbesondere von höchstens 1000 g/mol auf. Bevorzugt weisen die Kohlenwasserstoffharze (C2) zahlenmittlere Molmassen Mₙ von mindestens 100 g/mol, besonders bevorzugt von mindestens 200 g/mol, insbesondere von mindestens 250 g/mol auf.

Entsprechende Produkte (C2) sind beispielsweise unter den Handelsnamen NORSOLENE® W110 oder NORSOLENE® W80 von der Fa. TOTAL Cray Valley (USA-Exton, PA) erhältlich. Diese Produkte weisen mittlere Molmassen Mₙ von ca. 1000 g/mol und Erweichungspunkte von 110°C bzw. 80°C auf.

Die Kolophoniumharze (C3) können ausgewählt werden aus natürlichen oder modifizierten Kolophoniumharzen, beispielsweise Kolophoniumharze aus Kiefernholzteer oder Wurzelharz, sowie deren Derivate, bei denen es sich um hydrogenierte, dimerisierte, polymerisierte oder mit Mono-, Di- oder Oligoalkoholen wie Glycerin modifizierte Produkte handeln kann.

Bevorzugt weisen die Kolophoniumharze (C3) zahlenmittlere Molmassen Mₙ von höchstens 10 000 g/mol, besonders bevorzugt von höchstens 3000 g/mol, insbesondere von höchstens 2000 g/mol auf. Bevorzugt weisen die Kolophoniumharze (C3) zahlenmittlere Molmassen Mₙ von mindestens 100 g/mol, besonders bevorzugt von mindestens 200 g/mol, insbesondere von mindestens 250 g/mol auf.

Ein entsprechendes Produkt (C3) ist beispielsweise unter den Handelsnamen SYLVALITE® RE 100 von der Fa. Arizona Chemical (USA-Jacksonville, Florida) erhältlich. Bei diesem Produkt handelt es sich um ein Pentaerythrit Kolophonium mit einer mittleren Molmassen Mₙ von ca. 1700 g/mol.

Bei den Acrylesterharzen (C4) handelt es sich um Poly(meth)acrylate, die durch Polymerisation oder Copolymerisation von monomerer (Meth)acrylsäure bzw. monomeren (Meth)acrylsäurederivaten herstellbar sind, z.B. aus Acrylsäure, Methacrylsäure, C1-C20-Alkylacrylaten und/oder C1-C20-Alkylmethacrylaten, wie sie in der Literatur vielfach beschrieben sind. Bevorzugte monomere Bausteine sind dabei u.a. Acrylsäure, Methacrylsäure, Butylacrylat, 2-Ethylhexylacrylat und Hydroxyethylacrylat.

Bei der Herstellung der Acrylesterharze (C4) können auch andere ungesättigte Kohlenwasserstoffe als Co-Monomere eingesetzt werden. Ebenfalls können Blockcopolymere als Komponente (C4) verwendet werden, die neben der Poly(meth)acrylatkettenteil auch Kohlenwasserstoffkettenteile aufweisen können.

Bevorzugt weisen die Acrylesterharze (C4) zahlenmittlere Molmassen Mₙ von höchstens 100 000 g/mol, besonders bevorzugt von höchstens 20 000 g/mol auf. Bevorzugt weisen die Acrylesterharze (C4) zahlenmittlere Molmassen Mₙ von mindestens 200 g/mol, besonders bevorzugt von mindestens 400 g/mol, insbesondere von mindestens 600 g/mol auf.

Die Säurezahl der Acrylesterharze (C4) liegt vorzugsweise bei höchstens 150 mg KOH/g, besonders bevorzugt bei höchstens 100 mg KOH/g, insbesondere bei 10 bis 100 mg KOH/g.

Entsprechende Produkte (C4) sind beispielsweise unter den Handelsnamen KOLON® PX95 von der Fa. Kolon Industries Inc. (Korea, Kwacheon City) oder ACRONAL® 4F von der Fa. BASF (D-Ludwigshafen) erhältlich.

Jeweils bezogen auf 100 Gewichtsteile der Komponente (A) enthalten die erfindungsgemäßen Massen vorzugsweise mindestens 40 Gewichtsteile, besonders bevorzugt mindestens 50 Gewichtsteile, Komponente (C). Jeweils bezogen auf 100 Gewichtsteile der Komponente (A) enthalten die erfindungsgemäßen Massen vorzugsweise höchstens 300 Gewichtsteile, besonders bevorzugt höchstens 250 Gewichtsteile Komponente (C).

Die erfindungsgemäßen Massen (M) können zusätzlich zu den Komponenten (A), (B) und (C) noch weitere Stoffe enthalten, die unterschiedlich sind zu den Komponenten (A), (B) und (C), wie z.B. Katalysatoren (D), Füllstoffe (E), Haftvermittler (F), Wasserfänger (G), nicht reaktive Weichmacher (H), Additive (I) und Zuschlagstoffe (J).

Bei den in den erfindungsgemäßen Massen (M) gegebenenfalls eingesetzten Katalysatoren (D) kann es sich um beliebige, bisher bekannte Katalysatoren für durch Silankondensation härtende Massen handeln inklusive der oben bereits beschriebenen Katalysatoren (KB).

Beispiele für metallhaltige Härtungskatalysatoren (D) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (D) sind basische Verbindungen, wie Triethylamin, Tributylamin, 1,4-Diazabicyclo[2,2,2]octan, 1,5-Diazabicyclo[4.3.0]non-5-en (DBN), 1,8-Diazabicyclo[5.4.0]undec-7-en (DBU), N,N-Bis-(N,N-dimethyl-2-aminoethyl)-methylamin, Pentamethylguanidin, Tetramethylguanidin sowie weitere Guanidinderivate, N,N-Dimethylcyclohexylamin, N,N-Dimethylphenylamin und N-Ethylmorpholinin.

In einer bevorzugten Ausführungsform der Erfindung werden als Härtungskatalysatoren (D) aminoalkyl-funktionelle Alkoxysilane eingesetzt, wie z.B. H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH (CH₂)₃-Si(OC₂H₅)₂CH₃, HN((CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, wie auch deren Teilhydrolysate, wobei H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ oder jeweils deren Teilhydrolysate bevorzugt und H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OCH₃)₂CH₃ oder jeweils deren Teilhydrolysate besonders bevorzugt sind.

Ebenfalls als Katalysator (D) können saure Verbindungen eingesetzt werden, wie beispielsweise Phosphorsäure und ihre Ester, Toluolsulfonsäure, Schwefelsäure, Salpetersäure oder auch organische Carbonsäuren, z.B. Essigsäure und Benzoesäure.

Dabei kann jeweils nur ein Typ eines Katalysators (D) oder auch eine Mischung aus zwei oder mehreren Katalysatoren (D) verwendet werden.

Falls die erfindungsgemäßen Massen (M) Katalysatoren (D) enthalten, handelt es sich um Mengen von vorzugsweise 0,01 bis 30 Gewichtsteilen, besonders bevorzugt 0,1 bis 15 Gewichtsteilen, jeweils bezogen auf 100 Gewichtsteile Bestandteil (A). Die erfindungsgemäßen Massen (M) enthalten bevorzugt Katalysatoren (D) .

Bei den in den erfindungsgemäßen Massen (M) gegebenenfalls eingesetzten Füllstoffen (E) kann es sich um beliebige, bisher bekannte Füllstoffe handeln.

Beispiele für Füllstoffe (E) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, gefällter und/oder gemahlener Kreide, die sowohl beschichtet als auch unbeschichtet sein kann, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der 3M Deutschland GmbH in D-Neuss, elastische Kunststoffkugeln, wie etwa solche erhältlich unter der Handelsbezeichnung EXPANCEL® bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (E) um gemahlene und/oder gefällte Kreide, die sowohl beschichtet als auch unbeschichtet sein kann, Talkum, Aluminiumtrihydroxid sowie Kieselsäure, wobei Calciumcarbonat und Aluminiumtrihydroxid besonders bevorzugt werden. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (E) haben einen Feuchtigkeitsgehalt von bevorzugt unter 1 Gew.-%, besonders bevorzugt von unter 0,5 Gew.-%.

Falls die erfindungsgemäßen Massen (M) Füllstoffe (E) enthalten, handelt es sich um Mengen von vorzugsweise 10 bis 1000 Gewichtsteilen, besonders bevorzugt 50 bis 500 Gewichtsteilen, insbesondere 70 bis 200 Gewichtsteilen, jeweils bezogen auf 100 Gewichtsteile Bestandteil (A).

Bei den in den erfindungsgemäßen Massen (M) gegebenenfalls eingesetzten Haftvermittlern (F) kann es sich um beliebige, bisher für durch Silankondensation härtenden Systemen beschriebene Haftvermittler handeln, die unterschiedlich sind zu den Komponenten (A) bis (D). Vorzugsweise handelt es sich dabei um monomere Moleküle oder um über Siloxanbindungen oligomerisierte Silane, die unterschiedlich sind zu Komponente (D).

Bevorzugte Beispiele für Haftvermittler (F) sind Epoxysilane, wie Glycidoxypropyltrimethoxysilane, Glycidoxypropyl-methyldimethoxysilan, Glycidoxypropyltriethoxysilan oder Glycidoxypropyl-metyhldiethoxysilan, 2-(3-Triethoxysilylproypyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyltrimethoxysilan, Methacryloxymethyl-methyldimethoxysilan, Methacryloxymethyl-triethoxysilan, Methacryloxymethylmethyldiethoxysilan, 3-Acryloxypropyl-trimethoxysilan, Acryloxymethyl-trimethoxysilan, Acryloxymethyl-methyldimethoxysilane, Acryloxymethyl-triethoxysilan und Acryloxymethylmethyldiethoxysilan sowie deren Teilkondensate.

Falls die erfindungsgemäßen Massen (M) Haftvermittler (F) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile der Komponente (A).

Auch die oben als bevorzugte Katalysatoren (D) beschriebenen Aminoalkylsilane können als Haftvermittler dienen. Falls die erfindungsgemäßen Massen Aminoverbindungen (D) enthalten, kann auf den Zusatz von zusätzlichen Haftvermittlern (F) verzichtet bzw. die Menge an Komponente (F) reduziert werden.

Bei den in den erfindungsgemäßen Massen (M) gegebenenfalls eingesetzten Wasserfängern (G) kann es sich um beliebige, für durch Silankondensation härtenden Systemen beschriebene Wasserfänger handeln.

Beispiele für Wasserfänger (G) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan sowie O-Ethylcarbamatomethyl-triethoxysilan und/oder deren Teilkondensate sowie Orthoester, wie 1,1,1-Trimethoxyethan, 1,1,1-Triethoxyethan, Trimethoxymethan und Triethoxymethan.

Falls die erfindungsgemäßen Massen (M) Wasserfänger (G) enthalten, handelt es sich um Mengen von vorzugsweise 0,5 bis 30 Gewichtsteilen, besonders bevorzugt 1 bis 20 Gewichtsteilen, jeweils bezogen auf 100 Gewichtsteile der Komponente (A). Die erfindungsgemäßen Massen (M) enthalten bevorzugt Wasserfänger (G) .

Bei den in den erfindungsgemäßen Massen (M) gegebenenfalls eingesetzten nicht reaktiven Weichmachern (H) kann es sich um beliebige, bisher bekannte, für silanvernetzende Systeme typische Weichmacher handeln.

Beispiele für nicht reaktive Weichmacher (H) sind Phthalsäureester (z.B. Dioctylphthalat, Diisooctylphthalat und Diundecylphthalat), perhydrierte Phthalsäureester (z.B. 1,2-Cyclohexandicarbonsäurediisononylester und 1,2-Cyclohexandicarbonsäuredioctylester), Adipinsäureester (z.B. Dioctyladipat), Benzoesäureester, Glycolester, Ester gesättigter Alkandiole (z.B. 2,2,4-Trimethyl-1,3-pentandiolmonoisobutyrate und 2,2,4-Trimethyl-1,3-pentandioldiisobutyrate), Phosphorsäureester, Sulfonsäureester, Polyester, Polyether (z.B. Polyethylenglycole und Polypropylenglycole mit Molmassen Mₙ von vorzugsweise 400 bis 10 000 g/mol), Polystyrole, Polybutadiene, Polyisobutylene, paraffinische Kohlenwasserstoffe und hochmolekulare, verzweigte Kohlenwasserstoffe.

Falls die erfindungsgemäßen Massen (M) nicht reaktive Weichmacher (H) enthalten, handelt es sich um Mengen von vorzugsweise 0,01 bis 100 Gewichtsteilen, bezogen auf 100 Gewichtsteile Komponente (A). Vorzugsweise enthalten die erfindungsgemäßen Massen (M) keine nicht reaktiven Weichmacher (H).

Bei den in den erfindungsgemäßen Massen (M) gegebenenfalls eingesetzten Additiven (I) kann es sich um beliebige, bisher bekannte, für silanvernetzende Systeme typische Additive handeln.

Bei den erfindungsgemäß gegebenenfalls eingesetzten Additiven (I) handelt es sich bevorzugt um Antioxidantien, UV-Stabilisatoren, wie z.B. sog. HALS-Verbindungen (HALS = hindered amine light stabilizers), Fungizide oder Pigmente.

Falls die erfindungsgemäßen Massen (M) Additive (I) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Komponente (A). Die erfindungsgemäßen Massen (M) enthalten bevorzugt Additive (I).

Bei den erfindungsgemäß gegebenenfalls eingesetzten Zuschlagsstoffen (J) handelt es sich bevorzugt um Tetraalkoxysilane, z.B. Tetraethoxysilan und/oder deren Teilkondensate, Reaktivweichmacher, Rheologieadditive, Flammschutzmittel, organische Lösungsmittel oder nicht silanfunktionelle Polymere, insbesondere solche der Formeln (IV) und (VI).

Bevorzugte Reaktivweichmacher (J) sind Verbindungen, die Alkylketten mit 6 bis 40 Kohlenstoffatome enthalten und eine gegenüber den Verbindungen (A) reaktive Gruppe besitzen oder organische Polymere mit genau einer reaktiven Silylgruppe, die jedoch nicht den Formeln (I) oder (II) entsprechen.

Beispiele für Reaktivweichmacher (J) sind Isooctyltrimethoxysilan, Isooctyltriethoxysilan, N-Octyltrimethoxysilan, N-Octyltriethoxysilan, Decyltrimethoxysilane, Decyltriethoxysilan, Dodecyltrimethoxysiloxan, Dodecyltriethoxysilan, Tetradecyltrimethoxysiloxan, Tetradecyltriethoxysilan, Hexadecyltrimethoxysilan sowie Hexadecyltriethoxysilan und mit einer Gruppe der Formeln O-(CH₂)₃-Si(CH₃)(OCH₃)₂ oder -O-(CH₂)₃-Si(OCH₃)₃ funktionalisierte Polymere, insbesondere mit einer Gruppe der Formeln O-(CH₂)₃-Si(CH₃)(OCH₃)₂ oder -O-(CH₂)₃-Si(OCH₃)₃ funktionalisierte Polyoxypropylene oder Polyurethane.

Bei den Rheologieadditiven (J) handelt es sich bevorzugt um Polyamidwachse, hydrierte Rizinusöle oder Stearate.

Beispiele für organische Lösungsmittel (J) sind niedermolekulare Ether, Ester, Ketone, aromatische und aliphatische sowie gegebenenfalls halogenhaltige Kohlenwasserstoffe und Alkohole, wobei letztere bevorzugt werden.

Den erfindungsgemäßen Massen (M) werden vorzugsweise keine organischen Lösungsmitteln (J) zugesetzt.

Die erfindungsgemäßen Massen (M) enthalten bevorzugt keine nicht silanfunktionellen organischen Polymere (J), die unterschiedlich sind zu den Polymeren der Formeln (IV) und (VI). Falls die Massen (M) Polymere der Formeln (IV) und (VI) enthalten, handelt es sich bevorzugt um Mengen von weniger als 1 Gew.-%, besonders bevorzugt um weniger als 0,5 Gew.-%.

Falls die erfindungsgemäßen Massen (M) eine oder mehrere Komponenten (J) enthalten, handelt es sich jeweils um Mengen von bevorzugt 0,5 bis 200 Gewichtsteile, besonders bevorzugt um 1 bis 100 Gewichtsteile, insbesondere um 2 bis 70 Gewichtsteile, jeweils bezogen auf 100 Gewichtsteile Komponente (A). Die erfindungsgemäßen Massen (M) enthalten bevorzugt keine Komponente (J) .

Vorzugsweise enthalten die erfindungsgemäßen Massen (M) migrierbare Anteile, also nicht vernetzbare Anteile, wie nicht silanfunktionelle Katalysatoren (D), nicht reaktive Weichmacher (H), nicht reaktive Additive (I) oder nicht reaktive Zuschlagstoffe (J), in Mengen von höchstens 30 Gewichtsteilen, besonders bevorzugt in Mengen von höchstens 20 Gewichtsteilen, insbesondere von höchstens 10 Gewichtsteilen. Besonders bevorzugt enthalten die erfindungsgemäßen Massen (M) keine nicht reaktive Weichmacher (H).

Die erfindungsgemäßen Massen (M) enthalten außer den Komponenten (A) bis (J) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bevorzugt handelt es sich bei den erfindungsgemäßen Massen (M) um solche, enthaltend
(A) 100 Gewichtsteile Polymere ausgewählt aus Polymere (A1) und (A2),
(B) 10 bis 300 Gewichtsteile silanvernetzende Polymere mit mindestens zwei Endgruppen der Formel (III),
(C) 20 bis 400 Gewichtsteile eines Klebeharzes nach Anspruch 1,
   gegebenenfalls (D) Katalysatoren,
   gegebenenfalls (E) Füllstoffe,
   gegebenenfalls (F) Haftvermittler,
   gegebenenfalls (G) Wasserfänger,
   gegebenenfalls (H) nicht reaktive Weichmacher,
   gegebenenfalls (I) Additive und
   gegebenenfalls (J) Zuschlagstoffe.

Bei den erfindungsgemäßen Massen (M) handelt es sich besonders bevorzugt um solche enthaltend
(A) 100 Gewichtsteile Polymere ausgewählt aus Polymere (A1) und (A2),
(B) 20 bis 200 Gewichtsteile silanvernetzende Polymere mit mindestens zwei Endgruppen der Formel (III),
(C) 40 bis 300 Gewichtsteile eines Klebeharzes nach Anspruch 1,
(D) 0,1 bis 30 Gewichtsteile Katalysatoren,
   gegebenenfalls (E) Füllstoffe,
   gegebenenfalls (F) Haftvermittler,
   gegebenenfalls (G) Wasserfänger,
   gegebenenfalls (H) nicht reaktive Weichmacher,
   gegebenenfalls (I) Additive und
   gegebenenfalls (J) Zuschlagstoffe.

Bei den erfindungsgemäßen Massen (M) handelt es sich insbesondere um solche enthaltend
(A) 100 Gewichtsteile Polymere ausgewählt aus Polymere (A1) und (A2),
(B) 20 bis 200 Gewichtsteile silanvernetzende Polymere mit mindestens zwei Endgruppen der Formel (III),
(C) 40 bis 300 Gewichtsteile eines Klebeharzes nach Anspruch 1,
(D) 0,1 bis 30 Gewichtsteile Katalysatoren,
   gegebenenfalls (E) Füllstoffe,
   gegebenenfalls (F) Haftvermittler,
(G) 0,5 bis 30 Gewichtsteile Wasserfänger,
   gegebenenfalls (H) nicht reaktive Weichmacher,
   gegebenenfalls (I) Additive und
   gegebenenfalls (J) Zuschlagstoffe.

Bei den erfindungsgemäßen Massen (M) handelt es sich bevorzugt um Formulierungen mit Viskositäten von bevorzugt 500 bis 1 000 000 mPas, besonders bevorzugt von 1 000 bis 500 000 mPas, insbesondere 5 000 bis 100 000 mPas, jeweils bei 25°C.

Die erfindungsgemäßen Massen (M) sind feuchtigkeitshärtend, d.h. es handelt sich vorzugsweise um flüssige oder pastöse Massen, die bei Kontakt mit Wasser und/oder Luftfeuchtigkeit aushärten.

Die Herstellung der erfindungsgemäßen Massen (M) kann nach beliebiger und an sich bekannter Art und Weise erfolgen, wie etwa nach Methoden und Mischverfahren, wie sie zur Herstellung von feuchtigkeitshärtenden Zusammensetzungen üblich sind.

Ein weiterer Gegenstand der vorliegenden Erfindung ist ein Verfahren zur Herstellung der erfindungsgemäßen Massen (M) durch Mischen der einzelnen Komponenten in beliebiger Reihenfolge.

Dabei wird, falls Katalysator (D) verwendet wird, dieser bevorzugt erst am Ende des Mischvorganges zugesetzt.

Dieses Vermischen kann bei Raumtemperatur, d.h. bei Temperaturen zwischen 0 und 30°C und dem Druck der umgebenden Atmosphäre, also etwa 900 bis 1100 hPa, erfolgen. Vorzugsweise erfolgt das Vermischen jedoch bei höheren Temperaturen, z.B. bei Temperaturen im Bereich von 30 bis 130°C, bei denen Komponente (C) in geschmolzenem Zustand vorliegt. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit. Kurzzeitige Luftkontakte sind jedoch in der Regel möglich, deshalb ist im Produktionsprozess in der Regel keine aufwändige Schutzgastechnik erforderlich.

Das erfindungsgemäße Verfahren kann kontinuierlich oder diskontinuierlich durchgeführt werden.

Bei den erfindungsgemäßen Massen (M) handelt es sich bevorzugt um einkomponentige, unter Ausschluss von Wasser lagerfähige, bei Zutritt von Wasser bei Raumtemperatur vernetzbare Massen. Die erfindungsgemäßen Massen (M) können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen (M) reicht der übliche Wassergehalt der Luft aus. Die Vernetzung der erfindungsgemäßen Massen (M) erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehaltes der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen bzw. erfindungsgemäß hergestellten Massen (M).

Bei den erfindungsgemäßen Formkörpern handelt es sich bevorzugt um Beschichtungen, insbesondere um Klebstoffschichte zwischen zwei Substraten.

Die erfindungsgemäßen Massen (M) können für alle Zwecke eingesetzt werden, für die auch bisher vernetzbare Massen auf der Basis von Organosiliciumverbindungen eingesetzt worden sind, bevorzugt als Kleb- oder Dichtstoffe, besonders bevorzugt als Klebstoffe zum Verkleben von Substraten, bei denen mindestens eines der zu verklebenden Substrate über eine niederenergetischen Oberfläche verfügt. Beispiele wären das Verkleben von Kunststoffen wie EPDM, insbesondere EPDM-Dachbahnen, PVC, PE und PP.

Substrate mit einer niederenergetischen Oberfläche bedeutet im Sinne dieser Erfindung Substrate, vorzugsweise Kunststoffe, mit einer kritischen Grenzflächenenergie von maximal 60 mN/m, insbesondere maximal von 50 mN/m. Beispiele für Materialien mit niederenergetischen Oberflächen sind Polyethylen (PE), Polypropylen (PP), Polytetrafluorethylen (PTFE), Polymethymethacrylat (PMMA), Polyvinylchlorid (PVC) oder Polyethylenterephthalat (PET).

Ein weiterer Gegenstand der Erfindung ist ein Verfahren zur Verklebung von Substraten, bei dem die erfindungsgemäße Masse (M) auf die Oberfläche mindestens eines Substrates aufgebracht, diese Oberfläche dann mit dem zu verklebenden zweiten Substrat in Kontakt gebracht und die Masse (M) anschließend vernetzen gelassen wird.

Ein weiterer Gegenstand der Erfindung ist ein Verfahren zur Verklebung von Substraten, bei dem die erfindungsgemäße Masse (M) auf die Oberfläche mindestens eines Substrates aufgebracht und vernetzen gelassen wird, und diese beschichtete Oberfläche dann mit dem zu verklebenden zweiten Substrat in Kontakt gebracht wird.

Bevorzugte Beispiele für Substrate, die erfindungsgemäß verklebt werden können, sind Kunststoffe wie EPDM, PVC, PE und PP, aber auch Beton, mineralische Untergründe, Metalle, Glas, Keramik, lackierte Oberflächen oder Holz. Dabei können sowohl gleiche als auch unterschiedliche Materialen miteinander verklebt werden.

Die erfindungsgemäßen Massen (M) besitzen den Vorteil, dass sie leicht herstellbar sind.

Des Weiteren haben die erfindungsgemäßen Massen (M) den Vorteil, dass sie insbesondere auf niederenergetischen Oberflächen wie den o.g. Kunststoffen eine gute Haftung aufweisen.

Die erfindungsgemäßen Massen (M) haben den Vorteil, dass sie sich durch eine sehr hohe Lagerstabilität und eine hohe Vernetzungsgeschwindigkeit auszeichnen.

Des Weiteren haben die erfindungsgemäßen vernetzbaren Massen (M) den Vorteil, dass sie leicht zu verarbeiten sind.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

### Herstellung einer Klebstoffformulierung

In einem 500 ml Reaktionsgefäß mit Rühr-, Kühl- und Heizmöglichkeiten werden 97,2 g eines phenolmodifizierten Terpenharzes mit einer mittleren Molmasse Mₙ von 500 g/mol (käuflich erhältlich unter der Bezeichnung DERTOPHENE® T105 von der Fa. DRT, F-Dax Cedex) bei 120°C aufgeschmolzen.

Dann werden bei dieser Temperatur 48,4 g eines einseitig silanterminierten Polypropylenglycols mit einer mittleren Molmasse Mₙ von 5000 g/mol und einer Butyl-Endgruppe und einer Endgruppe der Formel -O-C(=O)-NH-(CH₂)₃-Si(OCH₃)₃ (käuflich erhältlich unter der Bezeichnung GENIOSIL® XM 25 bei der Wacker Chemie AG, D-München), 48,4 g eines beidseitig silanterminierten Polypropylenglycols mit einer mittleren Molmasse Mₙ von 12000 g/mol und Endgruppen der Formel -O-C(=O)-NH-CH₂-Si(CH₃)(OCH₃)₂ (käuflich erhältlich unter der Bezeichnung GENIOSIL® STP-E10 bei der Wacker Chemie AG, D-München), 4 g Vinyltrimethoxysilan, 2 g N-(2-Aminoethyl)-3-aminopropyltrimethoxysilan und 1,0 g einer Stabilisatormischung (unter der Bezeichnung TINUVIN® B 75 bei der BASF SE, Deutschland, käuflich erhältliche Mischung aus 20% Irganox® 1135 (CAS-Nr. 125643-61-0), 40% Tinuvin® 571 (CAS-NR. 23328-53-2) und 40% Tinuvin® 765 (CAS-NR. 41556-26-7)) zugegeben und homogen eingerührt.

Die so erhaltene Masse wird abgekühlt und in 310 ml PE-Kartuschen abgefüllt und 24 Stunden bei 20°C vor der Untersuchung gelagert.

### Beispiel 2

### Herstellung einer Klebstoffformulierung

Es wird so vorgegangen wie in Beispiel 1 beschrieben, allerdings wird anstelle von 48,4 g GENIOSIL® XM 25 dieselbe Menge eines einseitig silanterminierten Polypropylenglycols mit einer mittleren Molmasse Mₙ von 5000 g/mol und einer Butyl-Endgruppe und einer Endgruppe der Formel -O-C(=O)-NH-(CH₂)-Si(CH₃)(OCH₃)₂ (käuflich erhältlich unter der Bezeichnung GENIOSIL® XM 20 bei der Wacker Chemie AG, D-München) eingesetzt.

Die so erhaltene Masse wird abgekühlt und in 310 ml PE-Kartuschen abgefüllt und 24 Stunden bei 20°C vor der Untersuchung gelagert.

### Beispiel 3

### Herstellung einer Klebstoffformulierung

Es wird so vorgegangen wie in Beispiel 2 beschrieben, allerdings werden der Mischung anstelle von 2 g N-(2-Aminoethyl)-3-aminopropyltrimethoxysilan 0,4 g 1,8-Diazabicyclo[5.4.0]undec-7-en (DBU) zugesetzt.

Die so erhaltene Masse wird abgekühlt und in 310 ml PE-Kartuschen abgefüllt und 24 Stunden bei 20°C vor der Untersuchung gelagert.

### Vergleichsbeispiel 1

### Herstellung einer Klebstoffformulierung

Es wird so vorgegangen wie in Beispiel 1 beschrieben, allerdings werden anstelle von 48,4 g GENIOSIL® XM 25 und 48,4 g GENIOSIL® STP-E10 96,8 g GENIOSIL® STP-E10 eingesetzt.

Die so erhaltene Masse wird abgekühlt und in 310 ml PE-Kartuschen abgefüllt und 24 Stunden bei 20°C vor der Untersuchung gelagert.

### Vergleichsbeispiel 2

### Herstellung einer Klebstoffformulierung

Es wird so vorgegangen wie in Beispiel 1 beschrieben, allerdings wird anstelle von 48,4 g GENIOSIL® XM 25 dieselbe Menge eines linearen, OH-terminierten Polypropylenglycols mit einer mittleren Molmasse Mₙ von 2000 g/mol eingesetzt.

Die so erhaltene Masse wird abgekühlt und in 310 ml PE-Kartuschen abgefüllt und 24 Stunden bei 20°C vor der Untersuchung gelagert.

### Vergleichsbeispiel 3

### Herstellung einer Klebstoffformulierung

96,8 g GENIOSIL® XM 25 werden in einem Laborplanetenmischer der Fa. PC-Laborsystem, ausgestattet mit zwei Balkenmischern, bei ca. 25°C mit 96,8 g GENIOSIL® STP-E10, 4 g Vinyltrimethoxysilan und 2 g N-(2-Aminoethyl)-3-aminopropyltrimethoxysilan für 1 Minute bei 200 U/min vermischt. Anschließend wird für 1 Minute bei 200 U/min im Teilvakuum (ca. 100 mbar) homogenisiert und blasenfrei gerührt.

Die so erhaltene Masse wird abgekühlt und in 310 ml PE-Kartuschen abgefüllt und 24 Stunden bei 20°C vor der Untersuchung gelagert.

### Beispiel 4

### Bestimmung von Eigenschaftsprofilen der hergestellten Klebstoffe

Eine EPDM-Folie wird mit Ethanol gereinigt, trocknen gelassen und anschließend in jeweils 10 cm lange und 2 cm breite Streifen geschnitten. Anschließend werden jeweils 3 dieser Streifen ausgehend von einem Ende auf einer Länge von 7 cm mit jeweils einer der Klebstoffformulierungen aus den Beispielen 1 bis 3 bzw. den Vergleichsbeispielen 1 bis 3 bestrichen. Ein 3 cm langer Bereich an einem Ende der Streifen bleibt somit frei. Die Dicke der aufgetragenen Klebstoffschicht beträgt in allen Fällen 200 µm.

Anschließend werden die auf die beschriebene Weise partiell beschichteten Folienstreifen mit einem unbeschichteten EPDM-Folienstreifen derselben Größe verklebt, wobei beide Streifen deckungsgleich übereinandergelegt und über Nacht mit einer 1 kg schweren Platte beschwert werden. Die gemeinsame Klebefläche beträgt somit 7 x 2 cm, an die eine 3 x 2 cm große Fläche angrenzt, bei der die beiden Folienstreifen unverklebt übereinanderliegen.

Die so verklebten Folien werden für 7 Tage bei Normklima (23°C und 50% relative Luftfeuchtigkeit) gelagert. Anschließend werden die nicht verklebten Folienenden auseinandergebogen und in einer Materialprüfmaschine Z010 der Fa. Zwick eingespannt. Es wird die Kraft gemessen, die benötigt wird, um die verklebten Folien auseinander zu reißen. Die erhaltenen Messwerte finden sich in Tabelle 1.

**Tabelle 1:**

| **Formulierung** | **Notwendige Zugkraft (Durchschnittswert aus 3 Messungen) [N]** |
|---|---|
| Beispiel 1 | 2,2 |
| Beispiel 2 | 3,5 |
| Beispiel 3 | 3,1 |
| Vergleichsbeispiel 1 | 1,4 |
| Vergleichsbeispiel 2 | 0,9 |
| Vergleichsbeispiel 3 | 1,5 |

## Patentansprüche

1. Massen (M) enthaltend
(A) 100 Gewichtsteile silanvernetzende Polymere, ausgewählt aus
Polymere (A1) der Formel
R²-O-Z¹-O-CO-NH-(CH₂)-SiRₐ(OR¹)₃₋ₐ (I)
und
Polymere (A2) der Formel
R⁴-O-Z²-O-CO-NH-(CH₂)₃-Si(OR³)₃ (II),
wobei
Z¹ zweiwertige Polymerreste, die frei von C-gebundenen Hydroxylgruppen sind, bedeutet,
Z² zweiwertige Polymerreste, die frei von C-gebundenen Hydroxylgruppen sind, bedeutet,
R gleich oder verschieden sein kann und einen einwertigen, SiC-gebundenen, gegebenenfalls substituierten Kohlenwasserstoffrest darstellt,
R¹ gleich oder verschieden sein kann und Wasserstoffatom oder einwertige, gegebenenfalls substituierte Kohlenwasserstoffreste darstellt,
R³ gleich oder verschieden sein kann und Wasserstoffatom oder einwertige, gegebenenfalls substituierte Kohlenwasserstoffreste darstellt,
R² einwertige, gegebenenfalls substituierte Kohlenwasserstoffreste darstellt,
R⁴ einwertige, gegebenenfalls substituierte Kohlenwasserstoffreste darstellt und
a gleich 0 oder 1 ist,
(B) 0 bis 300 Gewichtsteile silanvernetzende Polymere mit mindestens zwei Endgruppen der Formel
-SiR⁷_{c}(OR⁸)_{3-c} (III),
wobei
R⁷ gleich oder verschieden sein kann und einwertige, SiC-gebundene, gegebenenfalls substituierte Kohlenwasserstoffreste darstellt,
R⁸ gleich oder verschieden sein kann und Wasserstoffatom oder einwertige, gegebenenfalls substituierte Kohlenwasserstoffreste darstellt und
c gleich 0, 1 oder 2 ist,
sowie
(C) 20 bis 400 Gewichtsteile eines Klebeharzes, **dadurch gekennzeichnet, dass** es sich bei Klebeharz (C) um Verbindungen handelt, die ausgewählt werden aus
(C1) phenolmodifizierten Terpenharzen,
(C2) Kohlenwasserstoffharzen,
(C3) Kolophoniumharzen und
(C4) Acrylesterharzen.

2. Massen gemäß Anspruch 1, **dadurch gekennzeichnet, dass** es sich bei den Resten Z¹ und Z² um lineare Polyoxyalkylenreste, die frei von C-gebundenen Hydroxylgruppen sind, handelt.

3. Massen gemäß Anspruch 1 oder 2, **dadurch gekennzeichnet, dass** es sich bei den Resten R² und R⁴ unabhängig voneinander um gegebenenfalls mit Halogenatomen substituierte Alkylreste mit 1 bis 10 Kohlenstoffatomen handelt.

4. Massen gemäß einem oder mehreren der Ansprüche 1 bis 3, **dadurch gekennzeichnet, dass** sie Komponente (B) in Mengen von 10 bis 300 Gewichtsteilen enthalten.

5. Massen gemäß einem oder mehreren der Ansprüche 1 bis 4, **dadurch gekennzeichnet, dass** sie Wasserfänger (G) enthalten.

6. Massen gemäß einem oder mehreren der Ansprüche 1 bis 5, **dadurch gekennzeichnet, dass** es sich um solche handelt enthaltend
(A) 100 Gewichtsteile Polymere ausgewählt aus Polymere (A1) und (A2),
(B) 20 bis 200 Gewichtsteile silanvernetzende Polymere mit mindestens zwei Endgruppen der Formel (III),
(C) 40 bis 300 Gewichtsteile eines Klebeharzes,
(D) 0,1 bis 30 Gewichtsteile Katalysatoren,
gegebenenfalls (E) Füllstoffe,
gegebenenfalls (F) Haftvermittler,
(G) 0,5 bis 30 Gewichtsteile Wasserfänger,
gegebenenfalls (H) nicht reaktive Weichmacher,
gegebenenfalls (I) Additive und
gegebenenfalls (J) Zuschlagstoffe.

7. Verfahren zur Herstellung der Massen (M) gemäß einem oder mehreren der Ansprüche 1 bis 6 durch Mischen der einzelnen Komponenten in beliebiger Reihenfolge.

8. Formkörper hergestellt durch Vernetzung der Massen (M) gemäß einem oder mehreren der Ansprüche 1 bis 6 oder hergestellt gemäß Anspruch 7.

9. Verfahren zur Verklebung von Substraten, bei dem die Masse (M) gemäß einem oder mehreren der Ansprüche 1 bis 6 oder hergestellt gemäß Anspruch 7 auf die Oberfläche mindestens eines Substrates aufgebracht, diese Oberfläche dann mit dem zu verklebenden zweiten Substrat in Kontakt gebracht und die Masse (M) anschließend vernetzen gelassen wird.

10. Verfahren zur Verklebung von Substraten, bei dem die erfindungsgemäße Masse (M) gemäß einem oder mehreren der Ansprüche 1 bis 6 oder hergestellt gemäß Anspruch 7 auf die Oberfläche mindestens eines Substrates aufgebracht und vernetzen gelassen wird, und diese beschichtete Oberfläche dann mit dem zu verklebenden zweiten Substrat in Kontakt gebracht wird.

## Claims

1. Compositions (M) comprising
(A) 100 parts by weight of silane-crosslinking polymers, selected from polymers (A1) of the formula
R²-O-Z¹-O-CO-NH-(CH₂)-SiRₐ(OR¹)₃₋ₐ (I)
and polymers (A2) of the formula
R⁴-O-Z²-O-CO-NH-(CH₂)₃-Si(OR³)₃ (II),
where
Z¹ denotes divalent polymer radicals which are free from C-bonded hydroxyl groups,
Z² denotes divalent polymer radicals which are free from C-bonded hydroxyl groups,
R may be identical or different and represents a monovalent, SiC-bonded, optionally substituted hydrocarbyl radical,
R¹ may be identical or different and represents hydrogen atom or monovalent, optionally substituted hydrocarbyl radicals,
R³ may be identical or different and represents hydrogen atom or monovalent, optionally substituted hydrocarbyl radicals,
R² represents monovalent, optionally substituted hydrocarbyl radicals,
R⁴ represents monovalent, optionally substituted hydrocarbyl radicals, and
a is 0 or 1,
(B) 0 to 300 parts by weight of silane-crosslinking polymers having at least two end groups of the formula
-SiR⁷_{c}(OR⁸)_{3-c} (III),
where
R⁷ may be identical or different and represents monovalent, SiC-bonded, optionally substituted hydrocarbyl radicals,
R⁸ may be identical or different and represents hydrogen atom or monovalent, optionally substituted hydrocarbyl radicals, and
c is 0, 1 or 2,
and also
(C) 20 to 400 parts by weight of a tackifier resin, **characterized in that** tackifier resin (C) comprises compounds selected from
(C1) phenol-modified terpene resins,
(C2) hydrocarbon resins,
(C3) rosins, and
(C4) acrylic ester resins.

2. Compositions according to Claim 1, **characterized in that** the radicals Z¹ and Z² are linear polyoxyalkylene radicals which are free from C-bonded hydroxyl groups.

3. Compositions according to Claim 1 or 2, **characterized in that** the radicals R² and R⁴ independently of one another are alkyl radicals optionally substituted by halogen atoms and having 1 to 10 carbon atoms.

4. Compositions according to one or more of Claims 1 to 3, **characterized in that** they comprise component (B) in amounts of 10 to 300 parts by weight.

5. Compositions according to one or more of Claims 1 to 4, **characterized in that** they comprise water scavengers (G) .

6. Compositions according to one or more of Claims 1 to 5, **characterized in that** they are those comprising
(A) 100 parts by weight of polymers selected from polymers (A1) and (A2),
(B) 20 to 200 parts by weight of silane-crosslinking polymers having at least two end groups of the formula (III),
(C) 40 to 300 parts by weight of a tackifier resin,
(D) 0.1 to 30 parts by weight of catalysts,
optionally (E) fillers,
optionally (F) adhesion promoters,
(G) 0.5 to 30 parts by weight of water scavengers, optionally (H) nonreactive plasticizers,
optionally (I) additives, and
optionally (J) adjuvants.

7. Method for producing the compositions (M) according to one or more of Claims 1 to 6 by mixing the individual components in any order.

8. Shaped article produced by crosslinking the compositions (M) according to one or more of Claims 1 to 6 or produced according to Claim 7.

9. Method for adhesively bonding substrates, wherein the composition (M) according to one or more of Claims 1 to 6 or produced according to Claim 7 is applied to the surface of at least one substrate, this surface is then brought into contact with the second substrate to be bonded, and the composition (M) is subsequently caused to crosslink.

10. Method for adhesively bonding substrates, wherein the composition (M) according to one or more of Claims 1 to 6 or produced according to Claim 7 of the invention is applied to the surface of at least one substrate and is caused to crosslink, and this coated surface is then brought into contact with the second substrate to be bonded.

## Revendications

1. Matières (M), contenant :
(A) 100 parties en poids de polymères réticulant au silane, choisis parmi :
les polymères (A1) de la formule
R²-O-Z¹-O-CO-NH-(CH₂)-SiRₐ(OR¹)₃₋ₐ (I)
et les polymères (A2) de la formule
R⁴-O-Z²-O-CO-NH-(CH₂)₃-Si(OR³)₃ (II)
dans lesquelles
Z¹ signifie des radicaux polymères bivalents, qui sont exempts de groupes hydroxyle reliés à C,
Z² signifie des radicaux polymères bivalents, qui sont exempts de groupes hydroxyle reliés à C,
les R peuvent être identiques ou différents, et représentent un radical hydrocarboné monovalent, relié à SiC, éventuellement substitué,
les R¹ peuvent être identiques ou différents, et représentent un atome d'hydrogène ou des radicaux hydrocarbonés monovalents, éventuellement substitués,
les R³ peuvent être identiques ou différents, et représentent un atome d'hydrogène ou des radicaux hydrocarbonés monovalents, éventuellement substitués,
R² représente des radicaux hydrocarbonés monovalents, éventuellement substitués,
R⁴ représente des radicaux hydrocarbonés monovalents, éventuellement substitués, et
a représente 0 ou 1,
(B) 0 à 300 parties en poids de polymères réticulant au silane contenant au moins deux groupes terminaux de la formule :
-SiR⁻⁷_{c}(OR⁸)_{3-c} (III),
dans laquelle
les R⁷ peuvent être identiques ou différents, et représentent des radicaux hydrocarbonés monovalents, reliés à SiC, éventuellement substitués,
les R⁸ peuvent être identiques ou différents, et représentent un atome d'hydrogène ou des radicaux hydrocarbonés monovalents, éventuellement substitués, et
c représente 0, 1 ou 2,
ainsi que
(C) 20 à 400 parties en poids d'une résine adhésive, **caractérisées en ce que** la résine adhésive (C) consiste en des composés qui sont choisis parmi :
(C1) les résines de terpène modifiées par du phénol,
(C2) les résines hydrocarbonées,
(C3) les résines de colophane, et
(C4) les résines d'esters acryliques.

2. Matières selon la revendication 1, **caractérisées en ce que** les radicaux Z¹ et Z² consistent en des radicaux polyoxyalkylène linéaires qui sont exempts de groupes hydroxyle reliés à C.

3. Matières selon la revendication 1 ou 2, **caractérisées en ce que** les radicaux R² et R⁴ consistent indépendamment l'un de l'autre en des radicaux alkyle de 1 à 10 atomes de carbone, éventuellement substitués avec des atomes d'halogène.

4. Matières selon une ou plusieurs des revendications 1 à 3, **caractérisées en ce qu'**elles contiennent le composant (B) en quantités de 10 à 300 parties en poids.

5. Matières selon une ou plusieurs des revendications 1 à 4, **caractérisées en ce qu'**elles contiennent des capteurs d'eau (G).

6. Matières selon une ou plusieurs des revendications 1 à 5, **caractérisées en ce qu'**il s'agit de matières contenant :
(A) 100 parties en poids de polymères choisis parmi les polymères (A1) et (A2),
(B) 20 à 200 parties en poids de polymères réticulant au silane contenant au moins deux groupes terminaux de la formule (III),
(C) 40 à 300 parties en poids d'une résine adhésive,
(D) 0,1 à 30 parties en poids de catalyseurs,
éventuellement (E) des charges,
éventuellement (F) des promoteurs d'adhésion,
(G) 0,5 à 30 parties en poids de capteurs d'eau,
éventuellement (H) des plastifiants non réactifs,
éventuellement (I) des additifs, et
éventuellement (J) des ajouts.

7. Procédé de fabrication des matières (M) selon une ou plusieurs des revendications 1 à 6 par mélange des composants individuels dans un ordre quelconque.

8. Corps moulé fabriqué par réticulation des matières (M) selon une ou plusieurs des revendications 1 à 6 ou fabriquées selon la revendication 7.

9. Procédé de collage de substrats, dans lequel la matière (M) selon une ou plusieurs des revendications 1 à 6 ou fabriquée selon la revendication 7 est appliquée sur la surface d'au moins un substrat, puis cette surface est mise en contact avec le deuxième substrat à coller, puis la matière (M) est laissée réticuler.

10. Procédé de collage de substrats, dans lequel la matière (M) selon l'invention selon une ou plusieurs des revendications 1 à 6 ou fabriquée selon la revendication 7 est appliquée sur la surface d'au moins un substrat et laissée réticuler, puis cette surface revêtue est mise en contact avec le deuxième substrat à coller.
